# EUROPEAN PATENT SPECIFICATION

(11) **EP 2 351 351 B1**
(45) Date of publication and mention of the grant of the patent: **16.09.2015**
(21) Application number: 08808000.7
(22) Date of filing: 01.10.2008
(51) Int. Cl.: H04N 5/217, G06T 7/00

(54) **A METHOD AND A SYSTEM FOR DETECTING THE PRESENCE OF AN IMPEDIMENT ON A LENS OF AN IMAGE CAPTURE DEVICE TO LIGHT PASSING THROUGH THE LENS OF AN IMAGE CAPTURE DEVICE**
VERFAHREN UND SYSTEM ZUM DETEKTIEREN DER ANWESENHEIT EINER BEHINDERUNG AUF EINER LINSE EINER BILDERFASSUNGSEINRICHTUNG GEGENÜBER DURCH DIE LINSE EINER BILDERFASSUNGSEINRICHTUNG VERLAUFENDEM LICHT
PROCÉDÉ ET SYSTÈME DE DÉTECTION DE LA PRÉSENCE SUR UNE LENTILLE D'UN DISPOSITIF DE CAPTURE D'IMAGES D'UNE OBSTRUCTION AU PASSAGE DE LA LUMIÈRE À TRAVERS LA LENTILLE DU DISPOSITIF DE CAPTURE D'IMAGES

(43) Date of publication of application: 03.08.2011
(73) Proprietor: Connaught Electronics Limited, County Galway (IE); Bayerische Motoren Werke Aktiengesellschaft, 80809 München (DE); Application Solutions Limited, East Sussex BN7 2AQ (GA)
(72) Inventor: MCANDREW, Fintan, County Galway (IE); WILHELM, Sascha, 85283 Wolnzach (DE); ZELLER, Armin, 80995 München (DE); BONE, Peter, BN7 2AF (GB)
(74) Representative: Jauregui Urbahn, Kristian
(86) International application number: PCT/IE2008/000093
(87) International publication number: WO 2010/038223

(56) References cited:
- EP-A- 1 790 541
- EP-A- 1 868 375
- WO-A-2006/024247
- DE-A1- 10 322 087

## Description

The present invention relates to a method and a system for detecting the presence of an impediment on a lens of an image capture device to the passage of light through the lens of the image capture device, and in particular, though not limited to a method and a system for detecting the presence of dirt on a lens of an image capture device mounted on a mobile vehicle, for example, a motor vehicle.

The presence of dirt on a lens of an image capture device such as a camera acts as an impediment to light passing through the lens into the camera, and thus, an image captured by the camera with dirt on the lens does not represent a true image within the field of view of the camera which should have been captured by the camera. Other impediments to light passing through the lens of a camera are water droplets, frost, snow and the like. In vehicle mounted cameras, the presence of such impediments to light passing through a lens into a camera leads to inaccurate images being displayed on a visual display screen, for example, a dashboard mounted visual display screen which is provided for presenting images captured by such a vehicle mounted camera to the driver. Such images, depending on where the camera is mounted on the vehicle, may be plan view images of an area adjacent one or both sides of the vehicle, or a plan view image to the rear or front of the vehicle, which in general, are provided for assisting the driver to manoeuvre the motor vehicle in a confined space. If such images are obscured or partly obscured, or distorted by the presence of dirt, water droplets or the like on a lens, the driver may be presented with a false image of the area adjacent the car, which can have catastrophic results, for example, driving the vehicle into an object, or more seriously, striking a pedestrian.

There is therefore a need for a method and a system for detecting the presence of an impediment on a lens of an image capture device to light passing through the lens of the image capture device, and in particular, to a method and a system for detecting the presence of an impediment, for example dirt, on the lens of a vehicle mounted image capture device.

Document EP186375 A discloses an apparatus comprising image processing apparatus with obstacle detector for detecting a pixel corresponding to an obstacle which is in the image data by detecting whether the pixels value is within a predefined threshold range over plurality of frames.

Document EP1790541 A discloses an obstruction detection system on a vehicle's windshield which uses two cameras with different focus set-ups. An image processing unit compares high spatial frequencies of the images captured with both cameras after edge detection in the images is performed. Document WO2006/024247 A discloses detection of impediment, especially rain and fog, on a windshield of a vehicle using a camera. Two images of the same windshield part are taken, one before a windshield wiper passing over the windscreen in the visual region of the camera or a heating process is activated, and the other one after that. Finally, the two images are evaluated for changes using spatial frequency estimation.

The present invention is directed towards providing such a method and a System as set out in independent claims.

According to the invention there is provided a method for detecting the presence of an impediment on a lens of an image capture device to the passage of light through the lens thereof, the method comprising:
scanning image data of at least similar portions of at least two image frames of dissimilar images captured by the image capture device to detect respective areas in the at least two image frames, the image data of which is indicative of an area of substantially constant luminance, and
determining the presence of an impediment on the lens in response to locations of the areas, the image data of which are indicative of an area of substantially constant luminance in the at least two image frames substantially coinciding.

In one embodiment of the invention scanning of the image data of the at least similar portions of the at least two image frames is carried out by scanning image data of respective ones of a plurality of predefined areas at predefined locations in each of the at least two image frames.

In another embodiment of the invention each predefined area is of size less than 2% of the overall size of the image frame. Preferably, each predefined area is of size less than 1 % of the overall size of the image frame. Advantageously, each predefined area is of size less than 0.5% of the overall size of the image frame.

In another embodiment of the invention the high spatial frequency content of the image data of the predefined areas of each image frame of the at least two image frames is determined for determining if the image data of any of the predefined areas thereof is indicative of an area of substantially constant luminance.

Preferably, the image data of a predefined area of an image frame is determined as being indicative of an area of substantially constant luminance, if the image data is indicative of an area of low or no high spatial frequency content.

Advantageously, the image data of each predefined area of each image frame of the at least two image frames is high pass filtered for determining the high spatial frequency content of the predefined areas thereof. Preferably, the image data of each predefined area is high pass filtered by a convolution filter. Ideally, the image data of each predefined area is high pass filtered by a 3x3 convolution filter.

In one embodiment of the invention the total area of at least one image frame of the at least two image frames, the image data of which is indicative of an area of substantially constant luminance is computed, and preferably, a human sensory perceptible signal is produced in response to the total area of the at least one image frame, the image data of which is indicative of an area of substantially constant luminance exceeding a predetermined threshold area.

Advantageously, the entire area of each image frame of the at least two image frames is scanned.

In another embodiment of the invention image data of an area of each image frame of the at least two image frames in which the image data is expected to remain substantially constant is weighted with a low weighting relative to an area in each image frame of the at least two image frames in which image data thereof is expected to change in the respective image frames.

In a further embodiment of the invention the method is adapted for determining the presence of an impediment on the lens of an image capture device mounted on a mobile vehicle when the vehicle is moving.

Ideally, the method is adapted for detecting the presence of an impediment on a lens of the image capture device mounted on the vehicle when the vehicle is moving at a speed in the range of 5km per hour to 30km per hour.

The invention also provides a system for detecting the presence of an impediment on a lens of an image capture device to the passage of light through the lens thereof, the system comprising:
a means for scanning image data of at least similar portions of at least two image frames of dissimilar images captured by the image capture device to detect respective areas in the at least two image frames, the image data of which is indicative of an area of substantially constant luminance, and
a means for determining the presence of an impediment on the lens in response to locations of the areas, the image data of which are indicative of an area of substantially constant luminance in the at least two image frames substantially coinciding.

The advantages of the invention are many. The method and system according to the invention provide a relatively simple way of detecting the presence of dirt on a lens or other impediments to the passage of light through a lens of a camera, and in particular, of a camera mounted on a motor vehicle. Where the method and system are applied for detecting dirt on the lens of a vehicle mounted camera, the method and system may be operated at any time while the vehicle is being driven at a relatively low speed, typically between 10km per hour and 50km per hour, and thus, can operate in the background without interfering with the processing of image frames captured by the camera for display on a dashboard mounted visual display screen. Thus, the method and system can be operated for detecting the presence of dirt on a lens while image frames captured by the camera or processed versions thereof are being simultaneously displayed on the visual display screen.

The invention will be more clearly understood from the following description of a preferred embodiment thereof, which is given by way of example only, with reference to the accompanying drawings, in which:
Fig. 1 is a block representation of a system according to the invention for detecting the presence of an impediment on a lens of an image capture device to the passage of light through the lens,
Fig. 2 is a diagrammatic view of an image frame of an image captured by a camera to be processed by the system of Fig. 1, and
Fig. 3 is a diagrammatic view of the image frame of Fig. 2 having been processed by the system of Fig. 1.

Referring to the drawings, there is illustrated a system according to the invention, indicated generally by the reference numeral 1, for detecting the presence of an impediment on a lens of an image capture device, namely, a camera 3 to the passage of light through the lens to the camera 3. The camera 3 may be any suitable type of image capture device. It may be a camera of the type commonly referred to as a digital camera, or it may be a camera of the type commonly referred to as an analogue camera. Such digital and analogue cameras may be, for example, CMOS cameras, charged coupled device (CCD) cameras and the like. A typical CMOS digital camera would be a CMOS camera producing image frames of 640 pixels in the X direction and 480 pixels in the Y direction, at a rate of, for example, thirty image frames per second.

The camera 3 may be mounted in any desired location on the motor vehicle, for example, the camera 3 may be mounted to the rear of the motor vehicle for capturing images to the rear of the motor vehicle for displaying on a visual display screen 4, for example, a dashboard mounted visual display screen for presenting images captured by the camera 3 to a driver of the vehicle. Such rearward images may be downwardly looking plan view images of an area to the rear of the motor vehicle for use in assisting the driver to carry out reverse manoeuvring of the vehicle in a confined space, or the rearward images may be images looking in a generally rearward direction from the vehicle.

Alternatively, the camera 3 may be mounted on a side mirror of the motor vehicle for capturing a downward looking plan view image of the ground adjacent the side of the vehicle for display on the display screen 4, and also for assisting the driver in carrying out manoeuvring of the vehicle in a confined space, for example, for parking, and in particular, parking the vehicle parallel to a kerb. The camera 3 could also be located to the front of the vehicle for capturing a downward looking plan view of the ground adjacent the front of the vehicle, or for capturing an image looking in a generally forward direction from the vehicle. The mounting and operation of such cameras 3 will be well known to those skilled in the art, and further description of the mounting of such cameras should not be required.

However, while the system 1 will be described for detecting dirt on a lens of a single camera 3 only, it will be readily understood that the system 1 in practice will be used for substantially simultaneously detecting dirt on the lenses of a number of cameras, for example, a rearwardly mounted camera and cameras mounted on the respective side mirrors of a vehicle, and a forwardly mounted camera if such is provided. However, for convenience, the system 1 will be described for detecting dirt on a lens of a single camera 3 only.

The system 1 comprises a microprocessor 5 which is programmed for carrying out the method according to the invention which is described in detail below. A digitising circuit 7 converts analogue video signals from the camera 3 to digital image data representative of image frames captured by the camera 3, and the digital image data representative of the image frames captured by the camera 3 is read from the digitising circuit 7 by the microprocessor 5. The microprocessor 5 is programmed to process the digital image data representative of the image frames captured by the camera 3 to produce images suitable for displaying on the visual display screen 4. The digital image data read by the microprocessor 5 is corrected for fisheye distortion and perspective distortion by a fisheye correcting algorithm and a perspective correcting algorithm which are stored in the microprocessor 5, and which the microprocessor 5 applies to the digital image data read from the digitising circuit 5 prior to processing thereof. Such fisheye correcting and perspective correcting algorithms, and the processing of such image data for display on a visual display screen for presenting to a driver will be well known to those skilled in the art, and it is not intended to describe the processing of the image data for displaying images to the driver in further detail.

A speed input circuit 8 receives signals from an odometer of the motor vehicle, or from other monitoring circuitry which contains signals indicative of the speed of the vehicle. The speed input circuit 8 converts the signals into digital signals indicative of the speed of the vehicle, which are read by the microprocessor 5.

Before describing the system 1 in detail, an outline of the method according to the invention carried out by the system 1 in determining the presence of dirt on a lens will now be described. The digital image data representative of image frames sequentially captured by the camera 3 while the vehicle is moving are scanned to detect areas in the image frames, the image data of which is indicative of an area of substantially constant luminance. An area of substantially constant luminance in a captured image frame could result from dirt on a lens of the camera 3 blocking out light from that area of the captured image. When the vehicle is moving, image data of image frames captured by the camera 3 should differ from captured image frame to captured image frame. In this embodiment of the invention the method is carried out during periods during which the vehicle is moving at speeds in the range of 5km per hour to 30km per hour, since below or above those speeds the results may not be reliable. Therefore, if the image data of an area at the same location in a plurality of image frames sequentially captured by the camera while the vehicle is moving is indicative of an area of substantially constant luminance, then that area would be determined to have resulted from dirt on the lens of the camera 3. That is unless the area in which the area the image data of which is indicative of an area of substantially constant luminance in each sequentially captured image frame is located in an area of the sequentially captured image frames in which the image would be expected to remain unaltered in the sequentially captured image frames, even although the vehicle is moving. Such an area could, for example, be an area of the captured image frame above the horizon of a blue sky, which would be unlikely to change from captured image to captured image, even although the vehicle is moving. Another example of an area in a plurality of captured image frames in which the image would remain unaltered, would be an area of the image which included a portion of the motor vehicle, for example, in the case of a downwardly directed side mirror mounted camera, such a camera may capture an area of the side of the body of the vehicle. However, in such cases the system 1 apportions a low weighting to areas of substantially constant luminance which are located in areas of the image frame in which the image therein is not expected to alter from image frame to image frame.

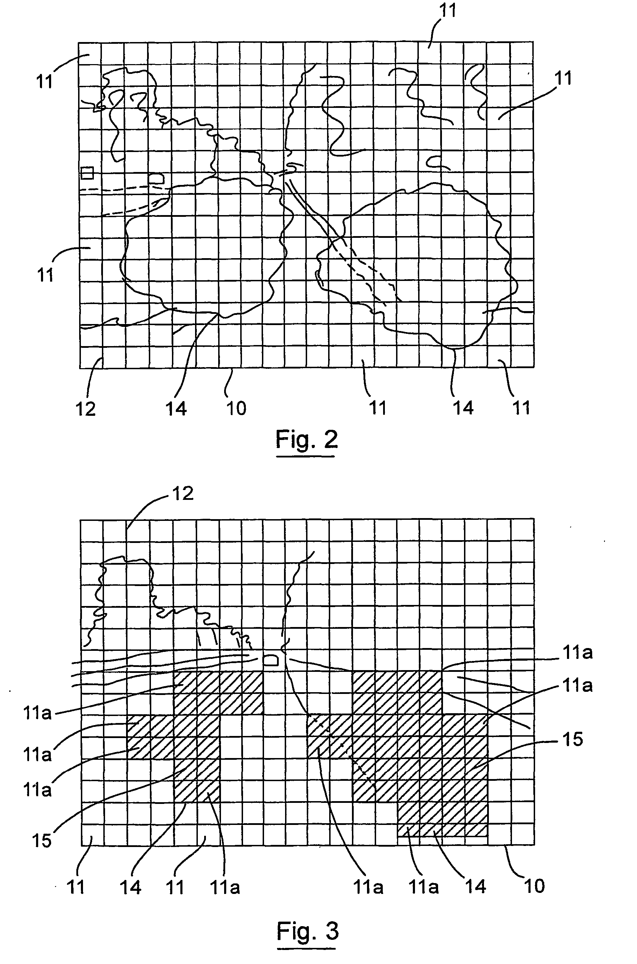

Referring now in particular to Figs. 2 and 3, an image frame captured by the camera 3 is illustrated and indicated by the reference numeral 10. In order to minimise the computations required to carry out the method according to the invention, the system 1 is operated to divide the image frames 10 captured by the camera 3 into a plurality of predefined areas 11 of predefined size at predefined locations by a grid pattern 12. The image data of each predefined area 11 of each of the sequentially captured image frames 10 which are captured while the vehicle is moving at speeds in the range of 5km per hour to 30km per hour is analysed to detect predefined areas the image data of which is indicative of an area of substantially constant luminance.

In this embodiment of the invention where the image frames 10 are of size 640 pixels in the X direction and 480 pixels in the Y direction, the predefined areas 11 are of size 32 pixels by 32 pixels, thus dividing each image frame into 300 predefined areas 11.

In order to detect predefined areas 11 in the respective sequentially captured image frames, the image data thereof is indicative of an area of substantially constant luminance, the image data of each predefined area 11 is high pass filtered to ascertain if any of the predefined areas 11 are areas of low or no high spatial frequency content. The absence of high spatial frequency content or low high spatial frequency content in a predefined area 11 is indicative of an area of substantially constant luminance, in other words, an area in which there are no steep luminance gradients. On detecting predefined areas 11 in the sequentially captured image frames 10, the locations at which the predefined areas 11 of substantially constant luminance occur in the image frames are compared. If the locations of the predefined areas 11, the image data of which is indicative of an area of substantially constant luminance coincide in the respective ones of the sequentially captured image frames, then that predefined area 11 is determined as resulting from dirt on the lens of the camera 3.

The image frame 10 of Fig. 2 is an image frame which has not been corrected for fisheye or perspective distortion, and which is about to be processed by the system 1. Two areas in the image 10 of Fig. 2 which are indicated by the reference numeral 14 have resulted from dirt on the lens of the camera 3. In Fig. 3 the image frame 10 corresponds to the image frame 10 of Fig. 2, and is illustrated having been processed by the system 1. The predefined areas 11 a, which as a result of high pass filtering thereof are detected as being areas of low or no high spatial frequency content, and which result from the presence of dirt on the lens of the camera 3 are illustrated by cross-hatching. The cross-hatched areas 15 are representative of the areas 14 in the corresponding image frame 10 of Fig. 2, which result from dirt.

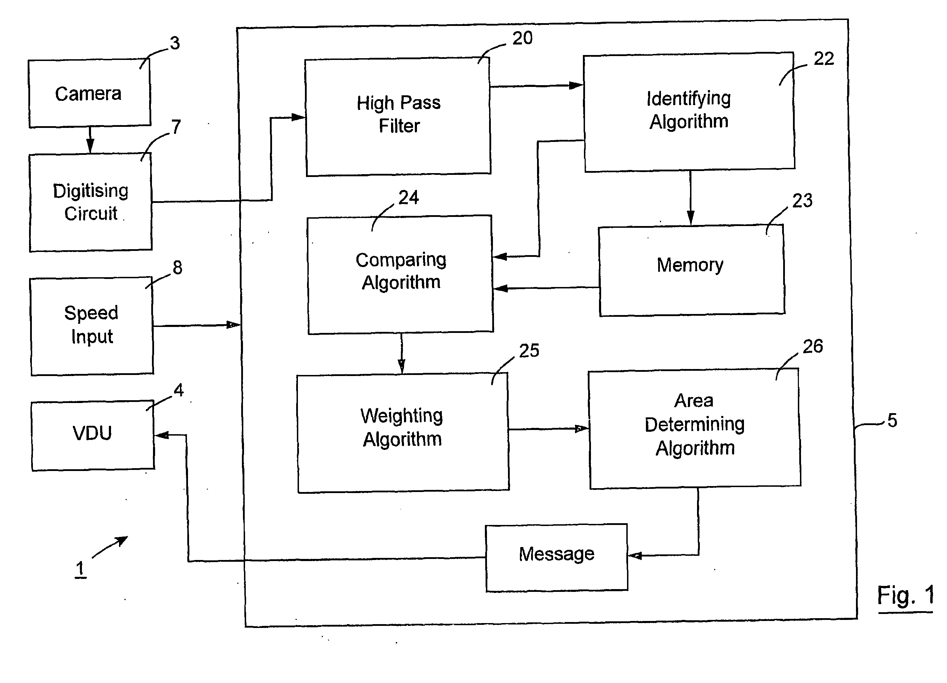

Referring now to Fig. 1, the microprocessor 5 is programmed to carry out the system 1 and comprises a high pass filter 20 which is implemented in software in the form of a 3x3 convolution filter. Image data representative of the image frames captured by the camera 3, which is read by the microprocessor 5, is passed through the high pass filter 20 in order to detect predefined areas 11, if any, of low or no high spatial frequency content. The image data representative of each predefined area 11 is individually filtered line by line by the high pass filter 20 as the image data is being received from the digitising circuit 7 for each image frame in order to detect those predefined areas 11, if any, the image data of which is indicative of an area of low or no high spatial frequency content. An identifying algorithm 22 stored in the microprocessor 5 identifies the locations in the image frame of the detected predefined areas 11, the image data of which is indicative of an area of low or no high frequency content. The identified locations are stored in a memory 23 in the microprocessor 5 for comparison with the next captured image frame.

A comparing algorithm 24 stored in the microprocessor 5 compares the identified locations of the detected predefined areas, if any, the image data of which is indicative of an area of low or no high spatial frequency content of the currently captured image frame with the stored identified locations of the detected predefined areas 11 of the previously captured image frame stored in the memory 23. If the image data of a predefined area 11 at a location in the currently captured image frame which corresponds to a stored identified location of a detected predefined area of the previously captured image frame is not indicative of an area of low or no high spatial frequency content, the predefined area 11 at that location in the currently captured image frame is deemed not to be a detected area, and thus, only the locations of the predefined areas of the currently captured image frame the image data of which is indicative of an area of low or no high spatial frequency content are deemed to be detected predefined areas and their respective locations are stored for comparison with the next captured image frame.

The comparing algorithm 24 continues to compare the locations in the currently captured image frame at which predefined areas 11, the image data of which is indicative of an area of low or no high spatial frequency content with the stored identified locations of the detected predefined areas of the previously captured image frame for fifty consecutive sequentially captured image frames. On the fiftieth captured image frame, the identified locations of detected areas in the fiftieth captured image frame are compared with the stored identified locations of the detected areas in the forty-ninth captured image frame, and those identified locations in the fiftieth and forty-ninth image frames which coincide are deemed to be locations of predefined areas 11 of which the low high spatial frequency content or the absence thereof may be as a result of dirt on the lens of the camera 3. The locations which are identified by the comparing algorithm 24 as being the locations of predefined areas which may have resulted from dirt on the lens are outputted to a weighting algorithm 25.

The weighting algorithm 25 applies a low weighting to the identified locations outputted by the comparing algorithm 24 which are in areas of the image in which the image data would be expected to remain substantially constant over a relatively large number of sequentially captured image frames while the vehicle is moving, and in particular, would be expected to remain constant over at least one hundred sequentially captured image frames. A higher weighting is applied by the weighting algorithm 25 to identified locations outputted by the comparing algorithm 24 in which image data would be expected to continuously change while the vehicle is moving.

As discussed above, areas of the captured image frames in which the image data would be expected to remain substantially constant over a relatively large number of sequentially captured image frames would be areas in the image frame, the image data of which is representative of a portion of the body of the vehicle, where the camera is set to capture in the image frames an image of a portion of the body thereof. This would typically be so in the case of side mirror mounted cameras which present a plan view image of an area of the vehicle adjacent the side of the motor vehicle. Another area in which the image data of the sequentially captured image frames would be expected to remain constant over a relatively large number of sequentially captured image frames would be an area of an image above the horizon, where the sky forms a part of the image.

After applying appropriate weightings to the identified locations outputted by the comparing algorithm 24, the weighting algorithm 25 determines the locations at which the image data of the predefined areas 11 of the image frames thereof is indicative of dirt on the lens of the camera 3.

A total area determining algorithm 26 stored in the microprocessor 5 computes the sum of the areas of the predefined areas 11 at the locations produced by the weighting algorithm 25 by multiplying the area of one predefined area 11 by the number of locations produced by the weighting algorithm 25. The total area determining algorithm 26 compares the total area of the predefined areas 11 at the locations produced by the weighting algorithm 25 with a predetermined threshold area value. If the total area of the predefined areas 11 at the locations produced by the weighting algorithm 25 exceeds the threshold area value, the dirt on the lens is deemed to be such as to result in images from the camera 3 being displayed on the visual display screen 4 which would be either misleading or of no value to the driver. Thus, if the total area determining algorithm 26 determines that the total area of the predefined areas 11 at the locations produced by the weighting algorithm 25 exceeds the threshold area value, the microprocessor 5 is programmed to cease producing images from the camera 3 for display on the visual display screen 4, and instead produces a dark blank area in place of the image in the area of the visual display screen 4 in which the image from the camera 3 should be displayed. Additionally, the microprocessor 5 is programmed to produce a signal which will result in a human sensory perceptible signal for the driver, which in this embodiment of the invention is a message for display on the visual display screen 4 which is outputted by the microprocessor 5 indicating to the driver that due to dirt on the lens of the camera 3, images from that camera 3 are no longer being displayed on the visual display screen 4 until the lens of the camera 3 has been cleaned.

While the scanning of the image data of the captured image frames has been described as being scanned in a grid pattern of areas of predefined areas, the image data of the captured image frames may be scanned by any other suitable technique for detecting the presence of an area the image data of which is indicative of an area of substantially constant luminance.

Additionally, while each captured image frame is only compared with the previously captured image frame over fifty consecutively captured image frames, it is envisaged in certain cases that each currently captured image frame could be compared with a number of previously captured image frames, and in which case, only the locations of those predefined areas, the image data of which is indicative of an area of low or no high frequency spatial content which coincided with a significant proportion of the plurality of previously captured image frames with which the currently captured image frame is being compared would be considered to be locations of predefined areas, the low high spatial frequency content or the absence of high spatial frequency content resulted from dirt on the lens of the camera. In which case, instead of only storing the identified locations of detected predefined areas of the current captured image frame, the identified locations of predefined areas of the plurality of previously captured image frames would be stored. It is also envisaged that the number of comparisons of the currently captured image frame with the immediately previously captured image frame could be any number of comparisons besides fifty as described.

While the method and system have been described for use in detecting dirt on a lens of a camera, the method and system may be used for detecting any other impediment to the passage of light through a lens of an image capture device, for example, impediments such as a water droplet, a snowflake, frost condensation, and the like, all of which would produce an area of substantially constant luminance in a captured image frame.

Additionally, while the camera has been described as being mounted on a motor vehicle, the method and system may be used for detecting the presence of dirt or other impediment to the passage of light on a lens on any camera, whether mounted on a motor vehicle or otherwise, provided that at least two image frames captured by the image capture device are of different images.

While the camera has been described as being a CMOS camera for producing image frames of 640 pixels by 480 pixels, any other camera may be used, be it a digital camera or an analogue camera, and be it a CMOS or a CCD camera, or indeed, any other camera, whether analogue or digital. Additionally, the camera may produce image frames at any suitable rate besides thirty image frames per second.

It will also be appreciated that the camera may be of the type which instead of producing an analogue video signal stream, may produce the data indicative of the image frames captured by the camera as digital image data. In which case, the digitising circuit may be omitted.

It will also be appreciated that in certain cases, the weighting of some of the locations of the predefined areas, the image data of which is indicative of an area of substantially constant luminance may be omitted , particularly in cases where the camera produces a plan view image of the ground which is known not to include an image of a portion of the body of the vehicle, or not to include areas in which the image data would be expected to remain substantially constant from captured image frame to captured image frame.

It will of course be appreciated that the threshold area value with which the total area of the predefined areas determined as having resulted from dirt on a lens is compared may be any suitable threshold value, for example, the threshold area value may, for example, be 15% of the total area of the captured image frame, or in other cases, it may be 30% of the total area of the captured image frame, or any other suitable proportion of the total area of the captured image frame.

It will also be appreciated that the speed of the vehicle at which the system is operable will vary, and will be dependent on a number of characteristics of the camera and in particular, the speed of capture of each image frame.

## Claims

1. A method for detecting the presence of an impediment on a lens of an image capture device to the passage of light through the lens thereof, the method comprising:
scanning image data of at least similar portions of at least two image frames of dissimilar images by scanning image data of respective ones of a plurality of predefined areas at predefined locations in each of the at least two images frames, the dissimilar images being captured by the image capture device to detect respective areas in the at least two image frames,
the method being **characterized by**
the image data of each predefined area of each image frame of the at least two image frames is high pass filtered for determining the high spatial frequency content of the predefined areas thereof in order to detect if the image data of any of the predefined areas thereof is indicative of an area of substantially constant luminance with low or no high spatial frequency content
wherein identifying the locations in the image frame of the detected predefined areas, the identified locations to be stored for comparison with the next captured image frame and
determining the presence of an impediment on the lens in response to locations of the areas, the image data of which are indicative of an area of substantially constant luminance in the at least two image frames substantially coinciding.

2. A method as claimed in Claim 1 in which each predefined area is of size less than 2% of the overall size of the image frame.

3. A method as claimed in any of Claims 1 or 2 in which each predefined area is of size less than 1% of the overall size of the image frame.

4. A method as claimed in Claim 1 in which the image data of each predefined area is high pass filtered by a convolution filter.

5. A method as claimed in any preceding claim in which the total area of at least one image frame of the at least two image frames, the image data of which is indicative of an area of substantially constant luminance is computed.

6. A method as claimed in Claim 5 in which a human sensory perceptible signal is produced in response to the total area of the at least one image frame, the image data of which is indicative of an area of substantially constant luminance exceeding a predetermined threshold area.

7. A method as claimed in any preceding claim in which the entire area of each image frame of the at least two image frames is scanned.

8. A method as claimed in any preceding claim in which image data of an area of each image frame of the at least two image frames in which the image data is expected to remain substantially constant is weighted with a low weighting relative to an area in each image frame of the at least two image frames in which image data thereof is expected to change in the respective image frames.

9. A method as claimed in any preceding claim in which the method is adapted for determining the presence of an impediment on the lens of an image capture device mounted on a mobile vehicle when the vehicle is moving.

10. A method as claimed in Claim 9 in which the method is adapted for detecting the presence of an impediment on a lens of the image capture device mounted on the vehicle when the vehicle is moving at a speed in the range of 5km per hour to 30km per hour.

11. A system for detecting the presence of an impediment on a lens of an image capture device to the passage of light through the lens thereof, the system comprising:
a means for scanning image data of at least similar portions of at least two image frames of dissimilar images by scanning image data of respective ones of a plurality of predefined areas at predefined locations in each of the at least two images frames, the dissimilar images being captured by the image capture device to detect respective areas in the at least two image frames,
the system being **characterized by**
a means for high pass filtering the image data of each predefined area of each image frame of the at least two image frames for determining the high spatial frequency content of the predefined areas thereof in order to detect if the image data of any of the predefined areas thereof is indicative of an area of substantially constant luminance with low or no high spatial frequency content,
a means for identifying the locations in the image frame of the detected predefined areas, the identified locations to be stored for comparison with the next captured image frame and
a means for determining the presence of an impediment on the lens in response to locations of the areas, the image data of which are indicative of an area of substantially constant luminance in the at least two image frames substantially coinciding.

## Patentansprüche

1. Verfahren zum Detektieren des Vorhandenseins eines Hindernisses auf einer Linse einer Bildaufnahmevorrichtung für den Lichtdurchtritt durch deren Linse, wobei das Verfahren Folgendes umfasst:
Abtasten von Bilddaten wenigstens ähnlicher Abschnitten von wenigstens zwei Bildrahmen von unähnlichen Bildern durch Abtasten von Bilddaten von jeweiligen aus mehreren vordefinierten Bereich an vordefinierten Orten in jedem der wenigstens zwei Bildrahmen, wobei die unähnlichen Bilder durch die Bildaufnahmevorrichtung aufgenommen werden, um die jeweiligen Bereiche in den wenigstens zwei Bildrahmen zu detektieren,
wobei das Verfahren durch Folgendes gekennzeichnet ist:
die Bilddaten jedes vordefinierten Bereichs jedes Bildrahmens aus den wenigstens zwei Bildrahmen werden hochpassgefiltert zum Bestimmen des hohen Ortsfrequenzinhalts der vordefinierten Bereiche davon, um zu detektieren, ob die Bilddaten irgendeines des vordefinierten Bereiche davon einen Bereich mit im Wesentlichen konstanter Luminanz mit niedrigem oder keinem hohen Ortsfrequenzinhalt angeben,
wobei das Identifizieren der Orte in dem Bildrahmen der detektierten vordefinierten Bereiche, der identifizierten Bereiche, die zum Vergleich mit dem nächsten aufgenommenen Bildrahmen gespeichert werden sollen, und
Bestimmen des Vorhandenseins eines Hindernisses auf der Linse in Reaktion auf Orte der Bereiche, deren Bilddaten einen Bereich von im Wesentlichen konstanter Luminanz in den wenigstens zwei Bildrahmen angeben, die im Wesentlichen zusammenfallen.

2. Verfahren nach Anspruch 1, in dem jeder vordefinierte Bereich von einer Größe ist, die weniger ist als 2 % der Gesamtgröße des Bildrahmens.

3. Verfahren nach einem der Ansprüche 1 oder 2, in dem jeder vordefinierte Bereich von einer Größe ist, die weniger ist als 1% der Gesamtgröße des Bildrahmens.

4. Verfahren nach Anspruch 1, in dem die Bilddaten jedes vordefinierten Bereichs durch ein Faltungsfilter hochpassgefiltert werden.

5. Verfahren nach einem der vorhergehenden Ansprüche, in dem der Gesamtbereich wenigstens eines Bildrahmens aus den wenigstens zwei Bildrahmen, dessen Bilddaten einen Bereich von im Wesentlichen konstanter Luminanz angeben, berechnet wird.

6. Verfahren nach Anspruch 5, in dem ein durch menschliche Sinneswahrnehmung erkennbares Signal in Reaktion auf den Gesamtbereich des wenigstens einen Bildrahmens, dessen Bilddaten einen Bereich von im Wesentlichen konstanter Luminanz angeben, der einen vorbestimmten Schwellenwert für den Bereich überschreitet, produziert wird.

7. Verfahren nach einem der vorhergehenden Ansprüche, in dem der vollständige Bereich jedes Bildrahmens aus den wenigstens zwei Bildrahmen abgetastet wird.

8. Verfahren nach einem der vorhergehenden Ansprüche, in dem die Bilddaten eines Bereichs jedes Bildrahmens aus den wenigstens zwei Bildrahmen, in dem erwartet wird, dass die Bilddaten im Wesentlichen konstant bleiben, mit einer niedrigen Gewichtung gewichtet werden im Vergleich zu einem Bereich in jedem Bildrahmen aus den wenigstens zwei Bildrahmen, in dem erwartet wird, dass sich die Bilddaten davon in den jeweiligen Bildrahmen ändern.

9. Verfahren nach einem der vorhergehenden Ansprüche, in dem das Verfahren zum Bestimmen des Vorhandenseins eines Hindernissees auf der Linse einer Bildaufnahmevorrichtung, die auf einem beweglichen Fahrzeug montiert ist, wenn sich das Fahrzeug bewegt, ausgelegt ist.

10. Verfahren nach Anspruch 9, in dem das Verfahren zum Detektieren des Vorhandenseins eines Hindernisses einer Linse der Bildaufnahmevorrichtung, die auf dem Fahrzeug montiert ist, während sich das Fahrzeug mit einer Geschwindigkeit im Bereich von 5 km pro Stunde bis 30 km pro Stunde bewegt, ausgelegt ist.

11. System zum Detektieren des Vorhandenseins eines Hindernisses auf einer Linse einer Bildaufnahmevorrichtung für den Lichtdurchtritt durch deren Linse, wobei das System Folgendes umfasst:
Mittel zum Abtasten von Bilddaten von wenigstens ähnlichen Abschnitten von wenigstens zwei Bildrahmen von unähnlichen Bildern durch Abtasten von Bilddaten von jeweiligen aus mehreren vordefinierten Bereich an vordefinierten Orten in jedem der wenigstens zwei Bildrahmen, wobei die unähnlichen Bilder durch die Bildaufnahmevorrichtung aufgenommen werden, um die jeweiligen Bereiche in den wenigstens zwei Bildrahmen zu detektieren,
wobei das System durch Folgendes gekennzeichnet ist:
Mittel zum Hochpassfiltern der Bilddaten jedes vordefinierten Bereichs jedes Bildrahmens aus den wenigstens zwei Bildrahmen zum Bestimmen des hohen Ortsfrequenzinhalts der vordefinierten Bereiche davon, um zu detektieren, ob die Bilddaten irgendeines des vordefinierten Bereiche davon einen Bereich mit im Wesentlichen konstanter Luminanz mit niedrigem oder keinem hohen Ortsfrequenzinhalt angeben,
Mittel zum Identifizieren der Orte in dem Bildrahmen der detektierten vordefinierten Bereiche, wobei die identifizierten Bereiche zum Vergleich mit dem nächsten aufgenommenen Bildrahmen gespeichert werden sollen und
Mittel zum Bestimmen des Vorhandenseins eines Hindernisses auf der Linse in Reaktion auf Orte der Bereiche, deren Bilddaten einen Bereich von im Wesentlichen konstanter Luminanz in den wenigstens zwei Bildrahmen angeben, die im Wesentlichen zusammenfallen.

## Revendications

1. Procédé pour détecter la présence d'une obstruction sur une lentille d'un dispositif de capture d'image au passage de la lumière à travers la lentille de celui-ci, le procédé comprenant les étapes suivantes :
balayer des données d'image d'au moins des parties similaires d'au moins deux trames d'image d'images dissemblables en balayant des données d'image de zones respectives d'une pluralité de zones prédéfinies à des emplacements prédéfinis dans chacune des au moins deux trames d'image, les images dissemblables étant capturées par le dispositif de capture d'image pour détecter des zones respectives dans les au moins deux trames d'image, le procédé étant **caractérisé par** :
les données d'image de chaque zone prédéfinie de chaque trame d'image des au moins deux trames d'image subissent un filtrage passe haut pour déterminer le contenu à hautes fréquences spatiales des zones prédéfinies de celles-ci afin de détecter si les données d'image de l'une quelconque des zones prédéfinies de celles-ci sont indicatives d'une zone de luminance sensiblement constante avec peu, ou pas, de contenu à hautes fréquences spatiales,
où sont identifiés les emplacements dans la trame d'image des zones prédéfinies détectées, les emplacements identifiés étant à stocker pour comparaison avec la trame d'image capturée suivante, et
déterminer la présence d'une obstruction sur la lentille en réponse à des emplacements des zones, dont les données d'image sont indicatives d'une zone de luminance sensiblement constante dans les au moins deux trames d'image sensiblement coïncidentes.

2. Procédé tel que revendiqué dans la revendication 1, dans lequel chaque zone prédéfinie a une taille inférieure à 2 % de la taille globale de la trame d'image.

3. Procédé tel que revendiqué dans l'une quelconque des revendications 1 ou 2, dans lequel chaque zone prédéfinie a une taille inférieure à 1 % de la taille globale de la trame d'image.

4. Procédé tel que revendiqué dans la revendication 1, dans lequel les données d'image de chaque zone prédéfinie subissent un filtrage passe haut par un filtre de convolution.

5. Procédé tel que revendiqué dans l'une quelconque des revendications précédentes, dans lequel la surface totale d'au moins une trame d'image des au moins deux trames d'image, dont les données d'image sont indicatives d'une zone de luminance sensiblement constante, est calculée.

6. Procédé tel que revendiqué dans la revendication 5, dans lequel un signal perceptible par les sens humains est produit en réponse à la surface totale de l'au moins une trame d'image, dont les données d'image sont indicatives d'une zone de luminance sensiblement constante dépassant un seuil prédéterminé de la surface.

7. Procédé tel que revendiqué dans l'une quelconque des revendications précédentes, dans lequel la surface totale de chaque trame d'image des au moins deux trames d'image est balayée.

8. Procédé tel que revendiqué dans l'une quelconque des revendications précédentes, dans lequel des données d'image d'une zone de chaque trame d'image des au moins deux trames d'image dans lesquelles les données d'image sont sensées rester sensiblement constantes sont pondérées avec une pondération faible par rapport à une zone dans chaque trame d'image des au moins deux trames d'image où des données d'image de celles-ci sont sensées changer dans les trames d'image respectives.

9. Procédé tel que revendiqué dans l'une quelconque des revendications précédentes, dans lequel le procédé est conçu pour déterminer la présence d'une obstruction sur la lentille d'un dispositif de capture d'image monté sur un véhicule mobile lorsque le véhicule se déplace.

10. Procédé tel que revendiqué dans la revendication 9, dans lequel le procédé est conçu pour détecter la présence d'une obstruction sur une lentille du dispositif de capture d'image monté sur le véhicule lorsque le véhicule se déplace à une vitesse comprise dans la plage de 5 km/heure à 30 km/heure.

11. Système pour détecter la présence d'une obstruction sur une lentille d'un dispositif de capture d'image au passage de la lumière à travers la lentille de celui-ci, le système comprenant :
un moyen pour balayer des données d'image d'au moins des parties similaires d'au moins deux trames d'image d'images dissemblables en balayant des données d'image de zones respectives d'une pluralité de zones prédéfinies à des emplacements prédéfinis dans chacune des au moins deux trames d'image, les images dissemblables étant capturées par le dispositif de capture d'image pour détecter des zones respectives dans les au moins deux trames d'image, le système étant **caractérisé par** :
un moyen pour effectuer un filtrage passe haut des données d'image de chaque zone prédéfinie de chaque trame d'image des au moins deux trames d'image pour déterminer le contenu à hautes fréquences spatiales des zones prédéfinies de celles-ci afin de détecter si les données d'image de l'une quelconque des zones prédéfinies de celles-ci sont indicatives d'une zone de luminance sensiblement constante avec peu, ou pas, de contenu à hautes fréquences spatiales,
un moyen pour identifier les emplacements dans la trame d'image des zones prédéfinies détectées, les emplacements identifiés étant à stocker pour comparaison avec la trame d'image capturée suivante, et
un moyen pour déterminer la présence d'une obstruction sur la lentille en réponse à des emplacements des zones, dont les données d'image sont indicatives d'une zone de luminance sensiblement constante dans les au moins deux trames d'image sensiblement coïncidentes.
